# EUROPEAN PATENT SPECIFICATION

(11) **EP 0 746 698 B1**
(45) Date of publication and mention of the grant of the patent: **30.11.2005**
(21) Application number: 94923394.4
(22) Date of filing: 11.07.1994
(51) Int. Cl.: F16C 19/30

(54) **THRUST BEARING ASSEMBLY**
AXIALLAGERANORDNUNG
ENSEMBLE A PALIER DE BUTEE

(30) Priority: 31.03.1994 US 221119
(43) Date of publication of application: 11.12.1996
(73) Proprietor: THE TORRINGTON COMPANY, Torrington, Connecticut 06790 (US)
(72) Inventor: RHOADS, Thomas, G., Thomaston, CT 06787 (US)
(74) Representative: Feakins, Graham Allan
(86) International application number: PCT/US1994/007700
(87) International publication number: WO 1995/027149

(56) References cited:
- DE-A- 3 905 986
- FR-A- 2 457 410
- US-A- 2 055 524
- US-A- 3 328 098
- US-A- 4 981 373
- US-A- 5 205 657

## Description

This invention relates generally to thrust bearings and, more particularly, to a thrust bearing assembly having a thrust washer and caged rollers for receiving an axial load between relatively rotatable members.

One common type of thrust bearing assembly comprises a cage and roller subassembly positioned between thrust washers and piloted on flanges of the thrust washers. The relative rotation between the thrust washers and the cage and roller subassembly produces heat, wear and drag associated with friction within the thrust washer assembly. The heat, wear and drag are amplified by increasing rotational speed, out-of-square geometry of adjacent members backing up the thrust bearing assembly, and eccentricity of the elements of the thrust bearing assembly, as well as other factors.

US-A-2 055 524 discloses a cage for ball or roller bearings with a hardened wearing ring to prevent wear of a casing.

FR-A-2 457 410 discloses a thrust bearing assembly with features, which are included in the preamble to claim 1.

According to the present invention, there is provided a thrust bearing assembly as set out according the wording of claim 1.

For a better understanding of the invention and to show how the same may be carried into effect, reference will now be made, by way of example to the accompanying drawings, in which:-
Fig. 1 is a cross-sectional view illustrating a prior art thrust bearing assembly;
Fig. 2 is a cross-sectional view illustrating a first embodiment of the present thrust bearing assembly;
Fig. 3 is an enlarged cross-sectional view of a portion of the thrust bearing assembly of Fig. 2;
Fig. 4 is a cross-sectional view illustrating a second embodiment of the present thrust bearing assembly; and
Fig. 5 is a cross-sectional view illustrating a third embodiment of the present thrust bearing assembly.

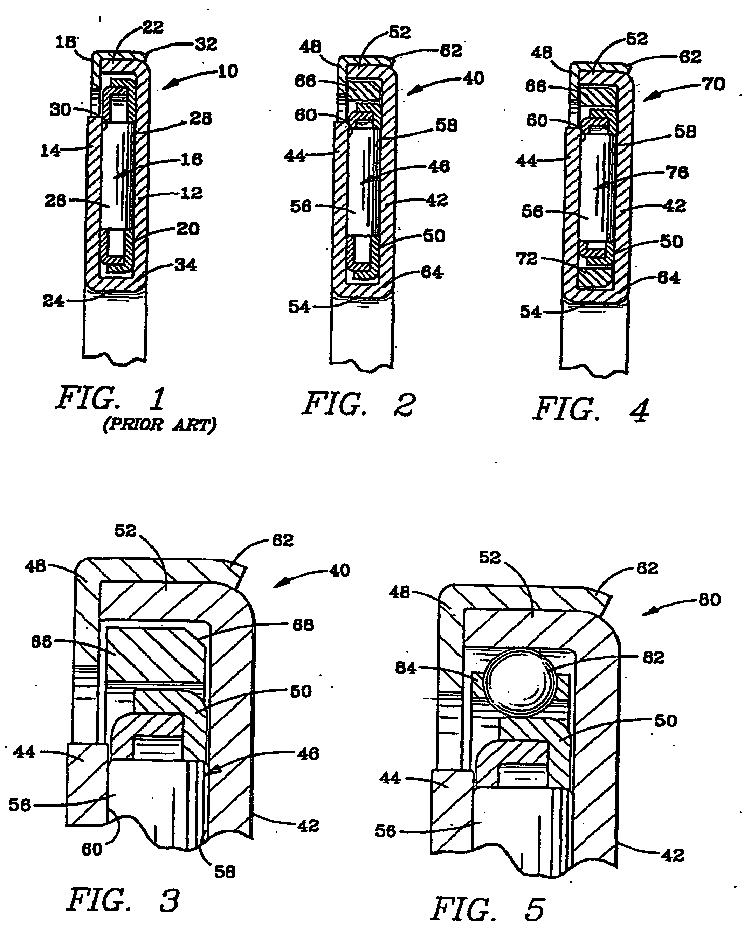

Figure 1 illustrates prior art thrust bearing assembly 10 comprising first thrust washer 12, second thrust washer 14, roller and roller cage assembly 16, and outer cup 18. However, it should be noted that there is a discrepancy in Figure 1, in that a gap should be shown between the thrust washers 12 and 14 in the region of a lip 34 (see below).

A roller cage 20 of the subassembly 16 is piloted on an axially directed annular first flange 22, integrally formed with the first thrust washer 12, and/or on an axially directed annular second flange 24 integrally formed with the second thrust washer 14. Rollers 26 of the subassembly 16 roll on a first raceway 28 and second raceway 30 of radially directed portions of the first and second thrust washers 12 and 14, respectively. The thrust bearing assembly 10 is held together by a lip 32 of the outer cup 18 and the lip 34 on the second washer 14, which wrap around the first thrust washer 12 and roller cage 20, respectively.

The thrust bearing assembly 40 of the Figure 2 illustrates an embodiment of the present assembly comprising a first thrust washer 42, a second thrust washer 44, a roller and roller cage assembly 46 and an outer cup 48. Again, Figures 2 and 4 show a discrepancy, in that a gap should be shown between the thrust washers 42 and 44 in the region of a lip 64 (see below).

A roller cage 50 of the subassembly 46 is radially spaced from an axially directed annular first flange 52, integrally formed with the first thrust washer 42 and is adjacent to an axially directed annular second flange 54, integrally formed with the second thrust washer 44. Rollers 56 of the subassembly 46 roll on a first raceway 58 and second raceway 60 of radially directed portions of the first and second thrust washers 42 and 44, respectively. The thrust bearing assembly 40 may be held together by various means, such as, for example, a lip 62 of the outer cup 48 and the lip 64 on the second flange 54 which wrap around the first thrust washer 42 and roller cage 50, respectively. Lips 62 and 64 may be formed by spinning, dimpling, staking or other means.

The radial space between the roller cage 50 and first flange 52 is sufficient to contain a friction reducing element in the form of a first annular bushing 66 for improved piloting of subassembly 46. The first bushing 66 may be moulded of a suitable polymer, such as, for example, polyetheretherketone or VESPEL (available from DuPont, Wilmington, Delaware), or may be machined or otherwise formed of bronze or other material providing low friction and low wear for sliding contact with adjacent elements of the bearing assembly, such as, for example, the first thrust washer 42, roller cage 50 and outer cup 48. If desired, additional piloting of the roller cage 50 may be provided by sliding engagement with the second flange 54.

As best shown in Figure 3, the first bushing 66 may have bevelled surface 68 or may be otherwise configured to provide clearance for an integral radius connecting the radially directed portion of the first thrust washer 42 (including first raceway 58) with the axially directed portion forming the first flange 52. The radial thickness and the axial length of the first bushing 66 depend on the size, speed of rotation and load of the thrust bearing assembly 40. For a typical configuration with a 2-inch (5.08cm) outside diameter, for example, the radial thickness and axial length may be, 0.030 and 0.250 inches (0.762-6.35mm), respectively.

The thrust bearing assembly 70 of Figure 4 illustrates a second embodiment similar to the thrust bearing assembly 40. In addition to the first bushing 66, the thrust bearing assembly 70 includes a second friction reducing element, such as a second bushing 72, for example, between the second flange 54 and roller cage 74, further to improve piloting of the roller cage 74. Compared to the subassembly 46 of Figure 2, the subassembly 76 of Figure 4 provides increased radial clearance between the roller cage 74 and second flange 54 for location of the second bushing 72.

In addition to the configurations of Figures 2 and 4, the present assembly may employ a single friction reducing element for piloting a roller and roller cage subassembly at its inside diameter. In that configuration, the second bushing 72, for example, would be used without first bushing 66. The roller cage for that configuration would have a modified form to position the rollers on the desired raceway surfaces and to provide a desired radial spacing at its outside diameter to facilitate additional piloting or other requirements.

Figure 5 illustrates a third embodiment similar to that of Figures 2 and 4 but incorporating a different type of friction reducing element. In place of the first bushing 66, the thrust bearing assembly 80 includes a plurality of rolling elements such as, for example, needle rollers or balls 82 within a retainer or cage 84 to reduce friction during piloting of roller cage 50. The balls 82 provide rolling contact with the first thrust washer 42 and roller cage 50, further reducing friction. A rolling element friction reducing means may also be employed in place of the second bushing 72.

The present construction is applicable to a wide range of thrust bearing configurations with various types of roller cages. The bushing or other friction reducing element may be positioned between the roller cage and piloting flange of any thrust washer. The piloting flange may be a separate annular axially directed surface rigidly attached to the thrust washer or may be integrally formed with the thrust washer by bending, crimping, machining or other means.

From the above, it will be apparent that improved piloting of a roller and roller cage subassembly in many forms of thrust bearing assemblies is provided. Heat, wear and drag resulting from friction between elements of the thrust bearing assembly are substantially reduced. In addition, higher rotational speed of the thrust bearing assembly and increased out-of-square geometry of backup members or eccentricity of the elements of the thrust bearing assembly is permitted.

## Claims

1. A thrust bearing assembly (40) comprising
a first thrust washer (42) having a first radially directed annular portion providing a first raceway (58) and an axially directed annular first flange (52) ;
a second thrust washer (44) with a second radially directed annular portion providing a second raceway (60) opposite the first raceway (58) ;
a subassembly (46) comprising a plurality of rollers (56), in rolling contact with the first raceway (58) and the second raceway (60) and a roller cage (50) retaining the rollers axially and radially, the subassembly having a pilot surface facing the first flange;
and a first friction reducing means positioned between the pilot surface of the subassembly (46) and the first flange (52), for reducing friction between the pilot surface and the first flange while maintaining concentricity of the subassembly relative to the first thrust washer; **characterized in that** said first friction reducing means is positioned to be in non-contacting relationship relative to the second thrust washer (44).

2. A thrust bearing according to claim 1 wherein the first friction reducing means is an annular bushing (66).

3. A thrust bearing assembly (40) according to claim 2, wherein the annular bushing (66) is made of a polymer.

4. A thrust bearing assembly (40) according to claim 1, 2 or 3, further comprising connecting means for retaining the first thrust washer (42) with respect to the second thrust washer (44) together such that the subassembly and the first friction reducing means are held with the first thrust washer and the second thrust washer as an assembly.

5. A thrust bearing assembly (40) according to claim 1, 2, 3 or 4, wherein the second thrust washer (44) includes an axially directed annular second flange (54) opposite the first flange, the subassembly being located between the first flange and the second flange.

6. A thrust bearing assembly (40) according to claim 5, further comprising a secondary annular bushing (72) between the subassembly and the second flange (54) for reducing friction between the subassembly and the second flange while maintaining concentricity of the subassembly relative to the second thrust washer.

7. A thrust bearing assembly (40) according to claim 6, wherein the secondary annular bushing (72) is made of a polymer.

8. A thrust bearing assembly (40) according to claim 5, further comprising a plurality of rolling elements (82) between the subassembly cage (46) and the second flange (54) for reducing friction between the subassembly and the second flange while maintaining concentricity of the subassembly relative to the second thrust washer.

9. A thrust bearing according to claim 1, wherein the first friction reducing means includes a plurality of rolling elements.

## Patentansprüche

1. Axiallageranordnung (40) mit
- einer ersten Axiallaufscheibe (42), die einen ersten, radial gerichteten ringförmigen Abschnitt, der eine erste Laufbahn (58) bildet, und einen axial gerichteten ringförmigen ersten Flansch (52) aufweist;
- einer zweiten Axiallaufscheibe (44) mit einem zweiten, radial gerichteten ringförmigen Abschnitt, der eine zweite Laufbahn (60) gegenüber der ersten Laufbahn (58) bildet;
- einer Unteranordnung (46), die eine Vielzahl von Rollen (56) in Wälzkontakt mit der ersten Laufbahn (58) und der zweiten Laufbahn (60), sowie einen Rollenkäfig (50) aufweist, der die Rollen axial und radial hält, wobei die Unteranordnung eine Führungsfläche hat, die auf den ersten Flansch zu weist;
- und mit einer ersten reibungsvermindernden Einrichtung, die zwischen der Führungsfläche der Unteranordnung (46) und dem ersten Flansch (52) angeordnet ist, um die Reibung zwischen der Führungsfläche und dem ersten Flansch zu vermindern, während die Konzentrizität der Unteranordnung relativ zu der ersten Axiallaufscheibe aufrechterhalten wird;
**dadurch gekennzeichnet, daß** die erste reibungsvermindernde Einrichtung so angeordnet ist, daß sie in einer nicht berührenden Beziehung relativ zu der zweiten Axiallaufscheibe (44) ist.

2. Axiallageranordnung nach Anspruch 1, bei der die erste reibungsvermindernde Einrichtung eine ringförmige Buchse (66) ist.

3. Axiallageranordnung (40) nach Anspruch 2, bei der die ringförmige Buchse (66) aus einem Polymer hergestellt ist.

4. Axiallageranordnung (40) nach Anspruch 1, 2 oder 3, die ferner Verbindungsmittel zum Halten der ersten Axiallaufscheibe (42) in Bezug auf die zweite Axiallaufscheibe (44) derart aufweist, daß die Unteranordnung und die erste reibungsvermindernde Einrichtung mit der ersten Axiallaufscheibe und der zweiten Axiallaufscheibe als eine Einheit gehalten sind.

5. Axiallageranordnung (40) nach Anspruch 1, 2, 3 oder 4, bei der die zweite Axiallaufscheibe (44) einen axial gerichteten ringförmigen zweiten Flansch (54) gegenüber dem ersten Flansch aufweist, wobei die Unteranordnung zwischen dem ersten Flansch und dem zweiten Flansch angeordnet ist.

6. Axiallageranaordnung (40) nach Anspruch 5, die ferner eine sekundäre ringförmige Buchse (72) zwischen der Unteranordnung und dem zweiten Flansch (54) zur Verminderung der Reibung zwischen der Unteranordnung und dem zweiten Flansch aufweist, während die Konzentrizität der Unteranordnung relativ zu der zweiten Axiallaufscheibe aufrechterhalten wird.

7. Axiallageranordnung (40) nach Anspruch 6, bei der die sekundäre ringförmige Buchse (72) aus einem Polymer hergestellt ist.

8. Axiallageranordnung (40) nach Anspruch 5, die ferner eine Vielzahl von Wälzelementen (82) zwischen dem Käfig (46) der Unteranordnung und dem zweiten Flansch (54) zur Verminderung der Reibung zwischen der Unteranordnung und dem zweiten Flansch aufweist, während die Konzentrizität der Unteranordnung relativ zu der zweiten Axiallaufscheibe aufrechterhalten wird.

9. Axiallageranordnung nach Anspruch 1, bei der die erste reibungsvermindernde Einrichtung eine Vielzahl von Wälzelementen aufweist.

## Revendications

1. Ensemble à palier de butée (1) comprenant
une première rondelle de butée (42) ayant une première partie annulaire dirigée radialement fournissant un premier chemin de roulement (58) et une première bride annulaire dirigée axialement (52) ;
une seconde rondelle de butée (44) avec une seconde partie annulaire dirigée radialement fournissant un second chemin de roulement (60) à l'opposé du premier chemin de roulement (58) ;
un sous-ensemble (46) comprenant une pluralité de rouleaux (56), en contact de roulement avec le premier chemin de roulement (58) et le second chemin de roulement (60), et une cage à rouleaux (50) maintenant les rouleaux axialement et radialement, le sous-ensemble ayant une surface pilote faisant face à la première bride ;
et un premier moyen de réduction de frottement positionné entre la surface pilote du sous-ensemble (46) et la première bride (52), destiné à réduire le frottement entre la surface pilote et la première bride tout en maintenant la concentricité du sous-ensemble par rapport à la première rondelle de butée ;
**caractérisé en ce que** ledit premier moyen de réduction de frottement est positionné pour être en relation sans contact par rapport à la seconde rondelle de butée (44).

2. Palier de butée selon la revendication 1 dans lequel le premier moyen de réduction de frottement est une douille annulaire (66).

3. Ensemble à palier de butée (40) selon la revendication 2, dans lequel la douille annulaire (66) est faite d'un polymère.

4. Ensemble à palier de butée (40) selon la revendication 1, 2 ou 3, comprenant en outre des moyens de raccordement destinés à maintenir la première rondelle de butée (42) par rapport à la seconde rondelle de butée (44) ensemble de sorte que le sous-ensemble et le premier moyen de réduction de frottement soient maintenus avec la première rondelle de butée et la seconde rondelle de butée pour former un ensemble.

5. Ensemble à palier de butée (40) selon la revendication 1, 2, 3 ou 4, dans lequel la seconde rondelle de butée (44) comprend une seconde bride annulaire dirigée axialement (54) à l'opposé de la première bride, le sous-ensemble étant situé entre la première bride et la seconde bride.

6. Ensemble à palier de butée (40) selon la revendication 5, comprenant en outre une douille annulaire secondaire (72) entre le sous-ensemble et la seconde bride (54) destinée à réduire le frottement entre le sous-ensemble et la seconde bride tout en maintenant la concentricité du sous-ensemble par rapport à la seconde rondelle de butée.

7. Ensemble à palier de butée (40) selon la revendication 6, dans lequel la douille annulaire secondaire (72) est faite d'un polymère.

8. Ensemble à palier de butée (40) selon la revendication 5, comprenant en outre une pluralité d'éléments de roulement (82) entre la cage de sous-ensemble (46) et la seconde bride (54) destinés à réduire le frottement entre le sous-ensemble et la seconde bride tout en maintenant la concentricité du sous-ensemble par rapport à la seconde rondelle de butée.

9. Palier de butée selon la revendication 1, dans lequel le premier moyen de réduction de frottement comprend une pluralité d'éléments de roulement.
